Europäisches Patentamt

European Patent Office

Office européen des brevets

(11) Veröffentlichungsnummer: **0 314 832**
**A1**

## (12) EUROPÄISCHE PATENTANMELDUNG

(21) Anmeldenummer: 87116392.9

(22) Anmeldetag: 06.11.87

(51) Int. Cl.⁴: **F16K 3/18**

(43) Veröffentlichungstag der Anmeldung:
**10.05.89 Patentblatt 89/19**

(84) Benannte Vertragsstaaten:
**DE**

(71) Anmelder: **LEYBOLD AKTIENGESELLSCHAFT**
**Bonner Str. 504**
**D-5000 Köln 51(DE)**

(72) Erfinder: **Contzen, Franz-Peter**
**Erlenweg 69**
**D-5000 Köln 30(DE)**
Erfinder: **Mühlhoff, Martin**
**Decksteiner Weg 1A**
**D-5000 Köln 41(DE)**
Erfinder: **Tuschwitz, Peter**
**Bergstrasse 13**
**D-5206 Neunkirchen-Seelscheid(DE)**

(74) Vertreter: **Leineweber, Jürgen, Dipl.-Phys. et al**
**Nagelschmiedshütte 8**
**D-5000 Köln 40(DE)**

(54) **Schliessmechanismus für Vakuumschieber.**

(57) Die Erfindung bezieht sich auf einen Schließmechanismus für Vakuumschieber mit einem Dichtteller (11), einem Gegenteller (12), einem zwischen den Tellern radial verschiebbaren Schlitten (16), mindestens einem vom Schlitten geführten Wälzkörperpaar (18) und mit Vertiefungen (21), welche dem Wälzkörperpaar (18) auf den Tellern (11,12) zugeordnet sind; um während der Verriegelungs- und Entriegelungsbewegungen schädliche Schläge zu vermeiden, wird vorgeschlagen, daß die Steigung des Hanges (22) der Vertiefungen (21) auf derjenigen Seite, auf der die Wälzkörper beim Öffnungs- und Verriegelungsvorgang abrollen, im Bereich des oberen Randes im wesentlichen stetig auf 0° zurückgeht.

FIG. 4

## Schließmechanismus für Vakuumschieber

Die Erfindung bezieht sich auf einen Schließmechanismus für Vakuumschieber mit einem Dichtteller, einem Gegenteller oder ähnlichem,einem zwischen den Tellern radial verschiebbaren Schlitten, mindestens einem vom Schlitten geführten Wälzkörperpaar und mit Vertiefungen, welche dem Wälzkörperpaar auf mindestens einem der Teller, vorzugsweise beiden Tellern, zugeordnet sind.

Aus der DE-PS 25 28 043 ist ein Schließmechanismus dieser Art bekannt. Als Wälzkörper dienen Kugeln. Die Vertiefungen sind als Mulden ausgebildet, die etwa den gleichen Krümmungs-radius haben wie die Kugeln. In der Offenstellung des Schiebers ruhen die Kugeln in den Vertiefungen.

Soll der Schieber geschlossen werden, dann werden die Teller und der dazwischen befindliche Schlitten mit den Kugelpaaren in die Schließstellung gebracht. Das Verriegeln des Schiebers geschieht dadurch, daß der Schlitten mit den Kugelpaaren um einen bestimmten Betrag weiterbewegt wird. Dadurch verlassen die Kugeln ihre Mulden, so daß Dichtteller und Gegenteller auseinandergedrückt werden.

Üblicherweise liegt der Dichtteller mit einem O-Ring dem Dichtsitz auf. Während des Verriegelungsvorganges beziehungsweise der Auseinanderbewegung von Dichtteller und Gegenteller übernimmt zunächst der O-Ring den axialen Hub, indem er sich entsprechend verformt. Ist der O-Ring "auf Block gefahren", verformen beziehungsweise wölben sich Dichtteller und Gegenteller. Aus diesen Abläufen resultiert eine nichtlineare Federkennlinie. Die Federsteifigkeit nimmt mit dem Übergang von der Verformung des O-Ringes zur Verformung von Dichtteller und Gegenteller, das ist etwa im letzten Drittel der Verriegelungsbewegung, stark zu. Die axial gerichtete Kraft erzeugt eine Reaktionskraft auf die Kugeln und versucht, diese in ihre Vertiefungen zurückzudrängen (Hangabtriebskraft). Diese Kraft wird in dem Moment schlagartig kleiner, in dem die Kugeln den Muldenrand überwunden haben. Ab diesem Punkt ist nur noch ein kleiner Teil der radialen Verriegelungskraft notwendig, um die Kugeln bis zu ihrer Endstellung zu bringen. Diese Kraft muß nur noch die Reibungskomponente der senkrecht auf die Kugeln wirkenden axialen Kraft überwinden.

Resultierend aus dem schlagartig kleiner werdenden Verriegelungswiderstand in radialer Richtung wird der gesamte Schließmechanismus radial stark beschleunigt. Hierbei entstehen Verriegelungsschläge, die in einzelnen Fällen 100 g überschreiten. Für an Schieber dieser Art angeschlossene Pumpen oder Rezipienten mit Experimentieraufbauten können Schläge dieser Art äußerst schädlich sein.

Beim Entriegeln bewegen sich die Kugeln von ihrer Endstellung (Schließstellung) zurück in ihre Vertiefungen. Sobald die Kugeln den Muldenrand erreicht haben, werden sie durch die beschriebene Hangabtriebskomponente der axialen Kraft beschleunigt und bewegen sich mit hoher Geschwindigkeit gegen den sie führenden Schließmechanismus und die angeschlossenen Hebel. Hierbei treten ebenfalls schlagartige Beschleunigungen auf, die zu nachteiligen Schlägen im System führen.

Der vorliegenden Erfindung liegt die Aufgabe zugrunde, einen Schließmechanismus für Vakuumschieber zu schaffen, bei dem die beim Verriegelungs- und Entriegelungsvorgang auftretenden Beschleunigungen beziehungsweise Schläge minimiert sind.

Erfindungsgemäß wird diese Aufgabe dadurch gelöst, daß die Steigung des Hanges der Vertiefungen auf derjenigen Seite, auf der die Wälzkörper beim Verriegelungs- und Entriegelungsvorgang abrollen, im Bereich des oberen Randes im wesentlichen stetig auf O zurückgeht. Bei einem in dieser Weise ausgebildeten Schließmechanismus nimmt der Beschleunigungen verursachende Kraftanstieg harmonisch zu. Ein derartiger Kraftanstieg ohne Sprünge läßt keine übermäßigen Beschleunigungen zu. Die bei Schließmechanismen nach dem Stand der Technik beobachteten Beschleunigungen konnten mit einem Schließmechanismus der erfindungsgemäßen Art auf etwa 5 % reduziert werden.

Weitere Vorteile und Einzelheiten der Erfindung sollen anhand von in den Figuren 1 bis 8 dargestellten Ausführungsbeispielen erläutert werden. Es zeigen:

Figuren 1 und 2 Schnitte durch einen Schieber der anmeldungsgemäßen Art in seiner Schließstellung,

Figuren 3 und 4 Ausführungsformen der den Wälzkörperpaaren zugeordneten Vertiefungen und

Figuren 5 bis 8 verschiedene Ausführungsformen von am Schlitten des Schiebers befestigten Federn.

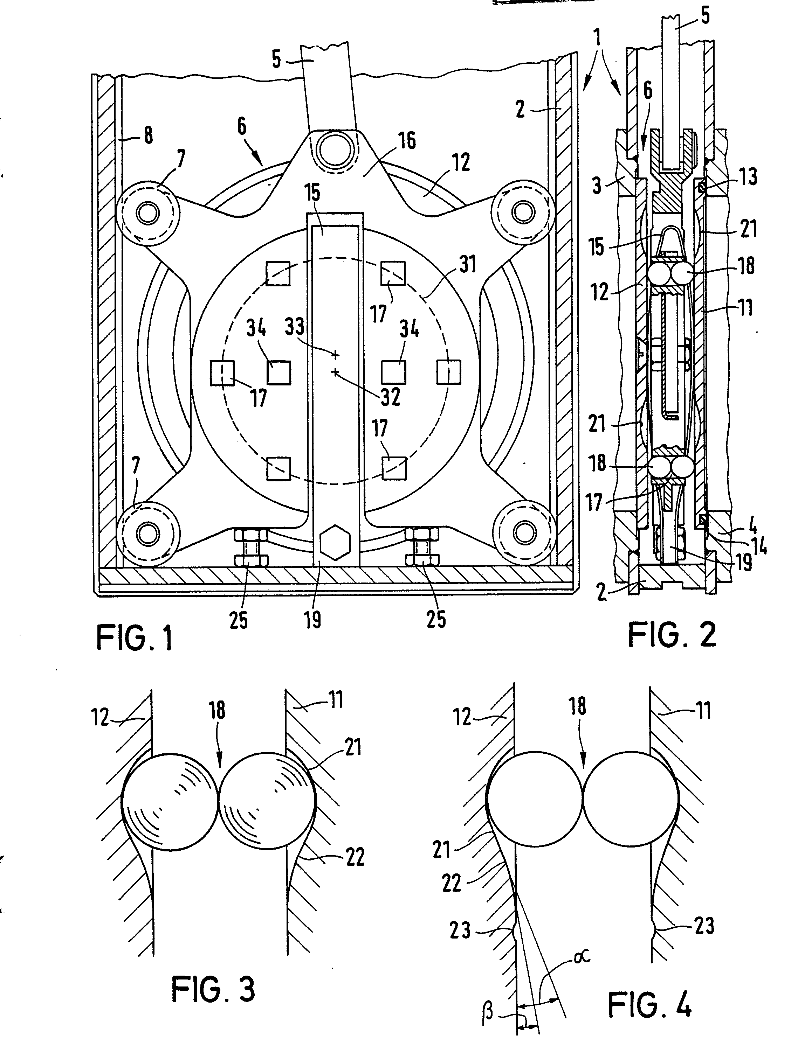

Den Figuren 1 und 2 entsprechend umfaßt der Schieber 1 nach der vorliegenden Erfindung das Schiebergehäuse 2, an dem die Anschlußrohre 3 und 4 befestigt sind. Mittels der Stange 5 ist der allgemein mit 6 bezeichnete Schließmechanismus innerhalb des Gehäuses 2 verschiebbar. Dazu sind in bekannter Weise Rollen 7 und Schienen 8 vorgesehen.

Der Schließmechanismus selbst umfaßt den Dichtteller 11 und den Gegenteller 12. Der Dichtteller 11 liegt mit seinem O-Ring 13 dem auf der Stirnseite des Anschlußrohres 4 ausgebildeten Ventilsitz 14 auf. Der Gegenteller 12 stützt sich auf der Stirnseite des Anschlußrohres 3 ab. Der Teller 12 hat im wesentlichen nur Stützfunktion und keine Abdichtfunktion, so daß nicht unbedingt eine tellerförmige Ausführung zwingend ist.

Zwischen den Tellern 11 und 12 befindet sich das Verriegelungssystem. Dies umfaßt die Blattfeder 15, die mit dem Dichtteller 11 und dem Gegenteller 12 fest verbunden ist und an ihrer dem Betätigungshebel 5 abgewandten Seite den Anschlag 19 trägt. Relativ zur Feder 15 verschiebbar ist der zentrale Schlitten 16. Der Schlitten 16 weist Öffnungen 17 auf, in denen Wälzkörperpaare 18 geführt sind. Den Wälzkörperpaaren 18 sind auf den Innenseiten von Dichtteller 11 und Gegenteller 12 Vertiefungen 21 zugeordnet, in denen sich die Wälzkörperpaare 18 befinden, wenn der Schieber seine Offenstellung einnimmt. Grundsätzlich reicht eine Vertiefung 21 am Dichtteller oder Gegenteller aus. Zweckmäßigerweise ist jedoch jedem Wälzkörper der Wälzkörperpaare 18 eine Vertiefung 21 zugeordnet. In der dargestellten Schließstellung befinden sich die Wälzkörperpaare neben den Vertiefungen 21, so daß Dichtteller 11 und Gegenteller 12 entgegen der Kraft der Blattfeder 15 auseinandergedrückt und damit verriegelt sind.

Die Figuren 3 und 4 lassen die erfindungsgemäße Ausbildung der Vertiefungen 21 erkennen. Der Hang 22, auf dem die Wälzkörper 18 während der Verriegelungs- und Entriegelungsvorgänge abrollen, hat in bezug auf die Dichttellerbeziehungsweise Gegentellerebene eine relativ geringe Steigung. Die Steigung des Hanges 22 ist in Fig. 4 anhand der Winkel $\alpha$ und $\beta$ näher erläutert. Die maximale Hangsteigung (Winkel $\alpha$) beträgt 20°. Ausgehend von diesem Wert geht die Hangsteigung bis zum oberen Rand der Vertiefung 21 stetig auf 0 zurück. Im oberen Drittel -das ist der Bereich, in dem eine Wölbung von Dichtteller 11 und Gegenteller 12 stattfindet, die axiale Reaktionskraft also besonders groß ist - ist die Hangsteigung (Winkel $\beta$) nicht größer als 6° und geht von diesem Wert aus kontinuierlich beziehungsweise stetig auf 0 zurück.

Die Form des Hanges 22 entspricht zweckmäßigerweise einer Sinus-Kurve, der Kurve einer $x_n^1$- Funktion oder einem Polynomzug. Die erwähnten maximalen Steigungen sollen dabei nicht überschritten werden.

Beim Ausführungsbeispiel nach Fig. 3 besteht das Wälzkörperpaar aus Kugeln, während es beim Ausführungsbeispiel nach Fig. 4 aus Rollen besteht. Unabhängig davon, ob Kugeln oder Rollen verwendet werden, sind die Vertiefungen 21 zweckmäßigerweise als in die Oberfläche der Teller 11,

12 eingelassene Bahnabschnitte ausgebildet, auf denen die Wälzkörper 18 abrollen. Bahnabschnitte dieser Art können in einfacher Weise mit einem Scheibenfräser hergestellt werden. Die Verwendung von auf Bahnen abrollenden Walzen oder Rollen hat gegenüber Kugeln außerdem noch den Vorteil, daß die auftretenden Flächenpressungen geringer sind.

Beim Ausführungsbeispiel nach Fig. 4 sind den Wälzkörpern 18 neben dem Hang 22 Rastnuten 23 zugeordnet. Diese Rastnuten 23 sind so klein bemessen, daß an der notwendigen axialen Vorspannung von Dichtteller11 und Gegenteller 12 nur ein geringer Anteil verloren geht. Die Funktionsfähigkeit des Schiebers ist nicht beeinträchtigt. Bei einer Tiefe der Vertiefung 21 von 2 mm und einem Kugel- oder Rollendurchmesser von 7 mm beträgt die Tiefe der Rastnut zweckmäßigerweise etwa 0,1 mm. Die Rastnuten 23 verhindern ein unbeabsichtigtes Lösen des Verriegelungsmechanismus', was zum Beispiel bei starken Erschütterungen möglich wäre.

Bei dem in den Figuren 1 und 2 dargestellten Ausführungsbeispiel des erfindungsgemäßen Schiebers fährt der Schlitten 16 zum Ende des Verriegelungsvorganges mit einem mechanischen Anschlag 25 gegen das Schiebergehäuse 2. Hierdurch wird ebenfalls ein meßbarer Körperschall erzeugt. Um auch diesen erheblich zu reduzieren, ist es zweckmäßig, statt der Anschläge 25 Federn 26 bis 29 vorzusehen. Besonders vorteilhaft ist es, wenn die Wirkung der Federn bereits dann einsetzt, wenn die Wälzkörper auf dem oberen Drittel des Hanges 22 abrollen. Nach der Überwindung des Hanges 22 ist dann immer noch eine Reaktionskraft vorhanden, so daß nachteilige Beschleunigungen weiter reduziert werden können.

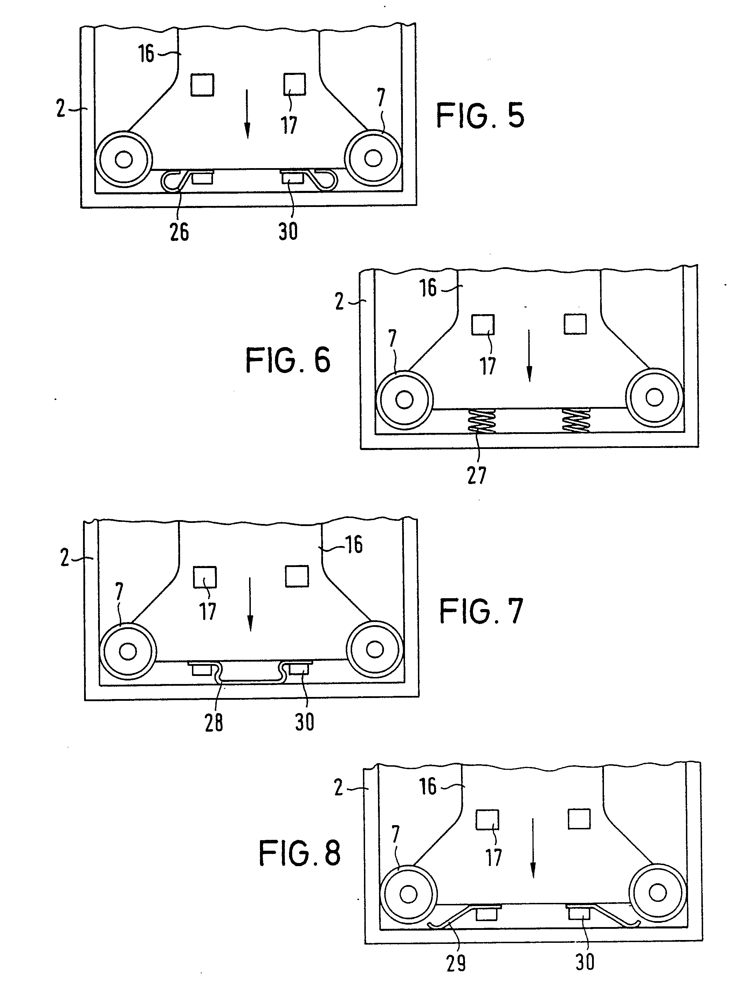

Bei den Ausführungsbeispielen nach den Figuren 5 und 8 bestehen die Federn 26 und 29 aus zwei geeignet verformten Metallbandabschnitten, die mit den Muttern 30 am Schlitten 16 befestigt sind. Beim Ausführungsbeispiel nach Fig. 7 ist ein einzelner Bandabschnitt 28 vorgesehen. Fig. 6 zeigt ein Ausführungsbeispiel mit Schraubenfedern 27, die, da sie mit langen Federwegen und flachen Kennlinien herstellbar sind, besonders geeignet sind.

Die Figuren 1 und 2 zeigen eine weitere Besonderheit des Schiebers nach der Erfindung. In an sich bekannter Weise sind die Führungsöffnungen 17 des Schiebers 16 auf einer Kreislinie 31 angeordnet. In der dargestellten Schließstellung des Schiebers liegt diese Kreislinie 31 jedoch nicht konzentrisch zu den Tellern 11, 12. Der Mittelpunkt 32 der Kreislinie 31 ist gegenüber dem Mittelpunkt 33 der Teller 11, 12 in Richtung der Verriegelungsbewegung verschoben, und zwar um einen Betrag, der etwa dem halben bis einem Durchmesser der Wälzkörper entspricht. Durch diese Maßnahmen wird erreicht, daß ohne Beeinträchtigung der Federeigenschaften des Dichttellers 11 infolge der gegenüber dem Stand der Technik längeren Vertiefungen 21 ein möglichst großer Anpreßkreis 31 beibehalten werden kann. Eine ungleichmäßige Verteilung der Dichtkraft über den Umfang des Dichttellers 11 durch die Dezentralisierung der Kreislinie 31 war nicht meßbar.

Beim dargestellten Ausführungsbeispiel sind innerhalb der Kreislinie 31 zusätzliche Öffnungen 34 zur Führung von Wälzkörperpaaren 18 vorgesehen. Diese Maßnahme ist zweckmäßig, wenn besonders hohe Anpreßkräfte erreicht werden sollen.

**Ansprüche**

1. Schließmechanismus für Vakuumschieber mit einem Dichtteller (11), einem Gegenteller (12), einem zwischen den Tellern radial verschiebbaren Schlitten (16), mindestens einem vom Schlitten geführten Wälzkörperpaar (18) und mit Vertiefungen (21), welche dem Wälzkörperpaar (18) auf den Tellern (11,12) zugeordnet sind, dadurch gekennzeichnet, daß die Steigung des Hanges (22) der Vertiefungen (21) auf derjenigen Seite, auf der die Wälzkörper beim Öffnungs- und Verriegelungsvorgang abrollen, im Bereich des oberen Randes im wesentlichen stetig auf 0° zurückgeht.

2. Mechanismus nach Anspruch 1, dadurch gekennzeichnet, daß die Steigung des Hanges (22) von etwa 20° derart auf 0° zurückgeht, daß keine Unstetigkeitsstelle vorhanden ist.

3. Mechanismus nach Anspruch 1 oder 2, dadurch gekennzeichnet, daß die Steigung des Hanges (22) im oberen Bereich (etwa oberes Drittel) <6° ist und stetig auf 0° zurückgeht.

4. Mechanismus nach einem der vorhergehenden Ansprüche, dadurch gekennzeichnet, daß sich an den Hang (22) eine Rastnut (23) anschließt.

Mechanismus nach Anspruch 4, dadurch gekennzeichnet, daß die Tiefe der Rastnut (23) etwa 5% der Tiefe der Vertiefungen (21) beträgt.

Mechanismus nach einem der vorhergehenden Ansprüche, dadurch gekennzeichnet, daß die Vertiefungen (21) als in die Oberfläche der Teller (11,12) eingelassene Bahnabschnitte ausgebildet sind, auf denen die Wälzkörper der Wälzkörperpaare (18) abrollen.

7. Mechanismus nach Anspruch 6, dadurch gekennzeichnet, daß die Wälzkörper der Wälzkörperpaare (18) als Rollen ausgebildet sind.

8. Mechanismus nach einem der vorhergehenden Ansprüche, dadurch gekennzeichnet, daß dem Schlitten (16) ein oder mehrere Federn (26 bis 29) zugeordnet sind, die den Anschlag des Schlittens (16) am Gehäuse (20) dämpfen.

9. Mechanismus nach Anspruch 8, dadurch gekennzeichnet, daß der Federweg so lang gewählt ist, daß etwa das letzte Drittel der Verriegelungsbewegung unter der Wirkung der Federn (26 bis 29) steht.

10. Mechanismus nach einem der vorhergehenden Ansprüche, dadurch gekennzeichnet, daß die Führungsöffnungen (17) für die Wälzkörperpaare (18) im Schieber (16) auf einer Kreislinie (31) angeordnet sind und daß in der Schließstellung des Schiebers (1) der Mittelpunkt (32) dieser Kreislinie (31) gegenüber dem Mittelpunkt (33) der Teller (11,12) um einen Betrag in Verriegelungsrichtung verschoben ist.

11. Mechanismus nach Anspruch 10, dadurch gekennzeichnet, daß der Abstand zwischen dem Mittelpunkt (33) der Teller (11,12) und dem Mittelpunkt (32) der Kreislinie (31) einen Wert hat, der zwischen einem halben und einem Durchmesser der Wälzkörper liegt.

12. Mechanismus nach Anspruch 10 oder 11, dadurch gekennzeichnet, daß innerhalb der Kreislinie (31) weitere Führungsöffnungen (34) für weitere Wälzkörperpaare (18) angeordnet sind.

FIG. 1

FIG. 2

FIG. 3

FIG. 4

87.018

FIG. 5

FIG. 6

FIG. 7

FIG. 8

87. 018

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 291 861 (FARIA) <br> * Figuren 1,2 * <br> --- | 1,6,10, 11 | F 16 K 3/18 |
| A | DE-C- 361 652 (HILPERT) <br> * Figuren 1-5 * <br> --- | 1,7 | |
| A | FR-A-1 220 887 (AIR-EQUIPEMENT) <br> * Figur 1 * <br> --- | 1 | |
| A | GB-A-2 116 680 (SCHERTLER) <br> * Figur 2 * <br> --- | 1 | |
| A | DE-A-3 028 786 (BALZERS HOCHVAKUUM) <br> * ganze Schrift * <br> --- | 1 | |
| D,A | DE-A-2 528 043 (VAT) <br> ----- | | |

RECHERCHIERTE SACHGEBIETE (Int. Cl.4)

F 16 K 3/00

Der vorliegende Recherchenbericht wurde für alle Patentansprüche erstellt

| Recherchenort | Abschlußdatum der Recherche | Prüfer |
|---|---|---|
| BERLIN | 15-06-1988 | SCHLABBACH M |